# EUROPEAN PATENT SPECIFICATION

(11) **EP 3 196 061 B1**
(45) Date of publication and mention of the grant of the patent: **16.09.2020**
(21) Application number: 14898417.2
(22) Date of filing: 30.07.2014
(51) Int. Cl.: B60H 1/22, B60L 7/02, B60H 1/00, B60H 1/14

(54) **PASSENGER VEHICLE**
PERSONENKRAFTWAGEN
VÉHICULE POUR PASSAGERS

(43) Date of publication of application: 26.07.2017
(73) Proprietor: Creatio Irizar Group Innovation Center Aie, 20216 Ormaiztegi (Guipúzcoa) (ES)
(72) Inventor: HERRANZ LANDA, Gorka, E-20216 Ormaiztegi (Guipúzcoa) (ES)
(74) Representative: Herrero & Asociados, S.L.
(86) International application number: PCT/ES2014/070619
(87) International publication number: WO 2016/016483

(56) References cited:
- WO-A1-96/41393
- WO-A1-2008/147305
- WO-A1-2008/147305
- DE-A1-102012 019 459
- US-A- 5 291 960
- US-A- 5 507 153
- US-A1- 2005 007 049
- US-A1- 2007 144 800

## Description

### Object of the Invention

The present invention relates to the field of vehicles for passengers incorporating at least one electric traction motor.

One object of the invention consists of providing a vehicle propelled by electric means, capable of providing the thermal and electrical requirements necessary for correct operation of both the electric traction motor and of the climate control system of the vehicle, using only one braking resistor.

Another object of the invention is to provide an electric traction vehicle capable of performing the thermal conditioning necessary for said vehicles, in a simple and cost-effective manner, by integrating the cooling and heating requirements in a single thermal conditioning circuit.

### Background of the Invention

Vehicles incorporating electric traction means today, such as hybrid or completely electric vehicles, have at least one braking resistor in charge of burning that energy generated by the electric traction means which, for some reason, may not be discharged into the storage system of the vehicle.

These braking resistors protect the traction system of the vehicle, preventing voltage peaks susceptible to damaging it from happening. In this sense, the braking resistors act like a safety mechanism of the traction system of the vehicle and assure proper operation of electric traction motors.

An example of the systems mentioned above can be found in the German patent application No. DE-102012019459-A1. This document discloses a temperature control device for a passenger car comprising a supplementary heating unit which interconnects heat forward and heat return flows of space heating unit with each other.

Additionally, and in a conventional manner, the vehicles incorporate a second braking resistor to meet the climate control system demands. This second braking resistor is responsible for heating the water necessary to meet a request for heat from the climate control system for the purpose of keeping the climate of the space reserved for passengers controlled.

According to the foregoing, the prior art does not provide a vehicle for passengers with an electric traction motor which is capable of burning the excess energy regenerated by the motor and which at the same time is capable of heating the water necessary for heating the space reserved for passengers, using a single braking resistor.

### Description of the Invention

The vehicle for passengers proposed by the present invention is therefore an improvement over what is known in the prior art since it satisfactorily meets the objectives indicated above as ideal in the art.

The invention consists of a vehicle for passengers according to claim 1, comprising an electric traction motor for driving or braking the vehicle, an energy storage system susceptible to storing at least part of the electric energy generated by the motor, a braking resistor in charge of dissipating part of the electric energy generated by the motor or stored in the energy storage system, a climate control system for controlling the climate of a space reserved for passengers, and a thermal conditioning circuit. The thermal conditioning circuit contains a coolant fluid capable of absorbing heat. Furthermore, said thermal conditioning circuit comprises a circulation pump in charge of propelling coolant fluid circulation through the thermal conditioning circuit, the braking resistor connected to the circulation pump, at least one distribution valve located for receiving the coolant fluid going through the braking resistor, and a control unit configured for activating the circulation pump and the at least one distribution valve according to pre-established conditions. The at least one distribution valve allows enabling the passage of coolant fluid towards one of the following branch lines forming the thermal conditioning circuit:
- a first branch line, connected to cooling means that allow the cooling of the coolant fluid contained in the thermal conditioning circuit after its passage through the braking resistor,
- a second branch line, connected with the climate control system for supplying heat to the space reserved for passengers from the heat transferred to the coolant fluid after its passage through the braking resistor.

The outlet of the cooling means and the outlet of the climate control system are connected to the braking resistor to allow the cooling thereof.

The described thermal conditioning circuit integrates, in one and the same circuit and using a single braking resistor, the functionalities typically required of braking resistors in a vehicle with an electric traction motor. To that end, the thermal conditioning circuit is provided with a first branch line, capable of cooling the braking resistor to assure correct operation without exceeding its maximum operating temperature, and with a second branch line, capable of providing hot water to the climate control system.

Preferably, the coolant fluid will consist of distilled water or a mixture comprising distilled water and coolant liquid.

The thermal conditioning circuit may work in cooling circuit mode through the first branch line, or in heating circuit mode through the second branch line. For cooling, the first branch line comprises cooling means which can comprise a radiator and/or a reservoir containing coolant fluid at a temperature lower than the temperature of the coolant fluid contained in the thermal conditioning circuit after its passage through the braking resistor, since in its passage through the braking resistor the coolant fluid will absorb part of the heat dissipated by the resistor. In order to be used as a water heater, the second branch line connects the outlet of the braking resistor with the climate control system. The circuit is thereby capable of supplying heat to the space reserved for passengers from the heat transferred to the coolant fluid after its passage through the braking resistor.

Likewise, the invention allows controlling the climate of the space reserved for passengers before the vehicle starts up, which prevents wasting part of the energy stored in the energy storage system of the vehicle once it is running. To that end, when the vehicle is connected to the grid, part of the electricity will be bypassed for heating the coolant fluid of the braking resistor by by-passing said fluid to the climate control system. This pre-heating prevents wasting energy stored for the initial thermal conditioning of the vehicle, since this energy is consumed directly from the grid, and the use of the stored energy is thereby optimized, using it only to move the vehicle. This pre-climate control can be performed while the storage system is charging or once it is charged.

Operation of the thermal conditioning circuit is controlled by the control unit, which controls the circulation pump and the at least one distribution valve, depending on a series of pre-established conditions. The circulation pump activates the circuit by propelling the coolant fluid through same, whereas the distribution valve enables the passage of the coolant fluid towards the first or second branch line. In that sense, the pre-established conditions will determine the activation or switching on of the thermal conditioning circuit as well as its operating mode.

According to a preferred embodiment, the thermal conditioning circuit comprises a third branch line connected to the outlet of the braking resistor and to the inlet of the circulation pump, and an additional distribution valve connected to the third branch line and capable of enabling the passage of coolant fluid through said third branch line. Furthermore, in this embodiment, the control unit is additionally configured for activating the additional distribution valve, once activated the circulation pump.

The third branch line works like a by-pass branch line to allow coolant fluid circulation through the thermal conditioning circuit in the event that the distribution valve malfunctions and does not allow the passage of the coolant fluid towards the first or the second branch line, and also for the purpose of preventing the pressure surge. The additional distribution valve allows enabling the passage of coolant fluid through the third branch line by means of the activation or deactivation thereof from the control unit. The thermal conditioning circuit thereby incorporates means protecting it in the event of a malfunction of any of its elements.

According to the invention, the vehicle for passengers, comprises the energy storage system susceptible to storing at least part of the electric energy generated by the motor, and/or the electric energy coming from charging method external to the vehicle or onboard said vehicle, and a storage electronic control unit (ECU) in charge of monitoring the state of charge of the energy storage system. In this preferred embodiment, the control unit of the thermal conditioning circuit is connected to the storage electronic control unit and is configured for receiving the charge of the energy storage system from said storage electronic control unit.

Preferably, the thermal conditioning circuit comprises a temperature sensor arranged in the braking resistor for detecting the temperature of the braking resistor, and wherein the temperature sensor is connected to the control unit for transmitting the temperature of the braking resistor.

Preferably, the vehicle for passengers comprises a traction electronic control unit (ECU) in charge of monitoring the traction of the vehicle, wherein the control unit of the thermal conditioning circuit is connected to the traction electronic control unit and is configured for receiving the energy consumed by the braking resistor from said traction electronic control unit.

According to another preferred embodiment, the control unit comprises the storage electronic control unit and the traction electronic control unit.

Preferably, the climate control system comprises a plurality of temperature sensors and a measurement unit in communication with the plurality of temperature sensors in charge of determining the activation of a request for heat by the climate control system depending on the temperatures detected by the plurality of sensors and on established target temperatures. Furthermore, in this preferred embodiment the control unit is configured for receiving the request for heat from the climate control system.

According to another preferred embodiment, the control unit is configured for activating a request for heat by the climate control system when the vehicle is connected to the grid and the energy storage system is charging or completely charged.

The invention thereby allows the climate control of the space reserved for passengers before the vehicle starts up, achieving a savings in the energy stored in the energy storage system, since the energy necessary for this pre-climate control is consumed directly from the grid. This climate control is performed with the dissipation of the electric energy stored in the energy storage system by the braking resistor, which continues charging as it is connected to the grid.

According to the invention, the control unit comprises at least one of the following pre-established conditions for activating the circulation pump:
- energy storage system charge greater than 95%,
- temperature of the braking resistor greater than 70°C,
- input power in the braking resistor greater than 0 kW,
- activation of a request for heat by the climate control system.

Preferably, if the energy storage system charge is greater than 95% and the temperature of the braking resistor is greater than 70°C, or the input power in the braking resistor is greater than 0 kW, the control unit is configured for activating the distribution valve such that it allows passage of the coolant fluid to the first branch line.

Likewise, according to another preferred embodiment, if the energy storage system charge is greater than 95% and the request for heat from the climate control system is activated, the control unit is configured for activating the distribution valve such that it allows passage of the coolant fluid to the second branch line.

Preferably, the climate control system comprises climate control equipment for controlling the climate of the space reserved for passengers, floor convectors for the space reserved for passengers, a defogging device for providing hot or cold air to the driver's seat area, and a network of distribution valves for distributing the coolant fluid contained in the second branch line between the climate control equipment, the floor convectors and the defogging device.

Preferably, the thermal conditioning circuit is connected to an expansion vessel for absorbing the differences in volume of the coolant fluid contained in said thermal conditioning circuit.

Preferably, the cooling means comprise a radiator and/or a reservoir containing coolant fluid at a temperature such that it allows the cooling of the coolant fluid contained in the thermal conditioning circuit after its passage through the braking resistor. The radiator can consist of a heat exchanger, in any of its variants, and comprise at least one fan.

According to a preferred embodiment, the braking resistor is connected to the outlet of the circulation pump, the distribution valve is connected to the outlet of the braking resistor, and the outlet of the cooling means and the outlet of the climate control system are connected to the braking resistor by means of the circulation pump.

According to an alternative embodiment with respect to the aforementioned embodiment, the circulation pump is connected to the outlet of the braking resistor, the distribution valve is connected to the outlet of the circulation pump, and the outlet of the cooling means and the outlet of the climate control system are directly connected to the braking resistor.

Preferably, the vehicle for passengers is a bus.

### Description of the Drawings

To complement the description that is being made and for the purpose of helping to better understand the features of the invention according to a preferred practical embodiment thereof, drawings are attached as an integral part of said description, wherein the following is depicted with an illustrative and non-limiting character:
Figure 1 shows a side perspective view of a vehicle for passengers in which some elements of the vehicle according to a preferred embodiment of the invention are schematically detailed.
Figure 2 shows a schematic view of the thermal conditioning circuit of the vehicle for passengers according to a preferred embodiment of the invention.

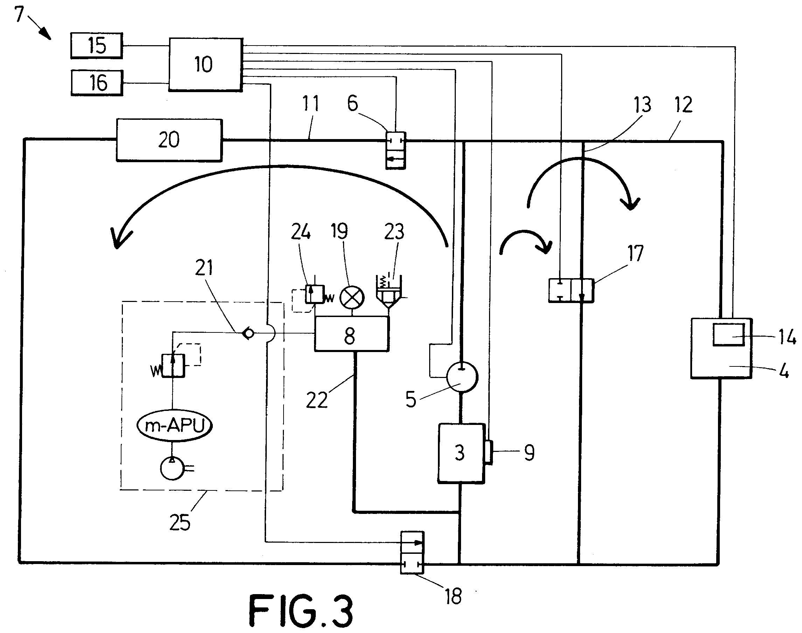

Figure 3 shows a schematic view of an alternative thermal conditioning circuit according to a preferred embodiment of the invention.

### Preferred Embodiment of the Invention

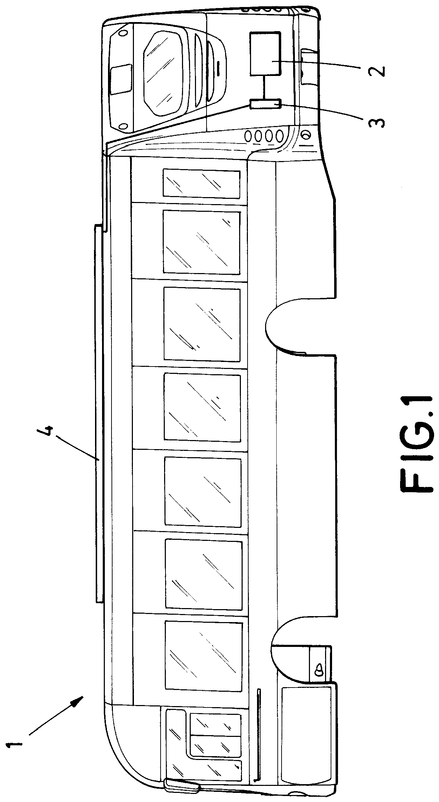

Figure 1 shows a bus-type vehicle 1 for passengers, comprising an electric traction motor 2 and a climate control system 4, in which both elements are connected with the braking resistor 3. The motor 2 is connected with the braking resistor 3 for dissipating part of the electric energy it generates and with the climate control system 4 for providing heat to the space reserved for passengers.

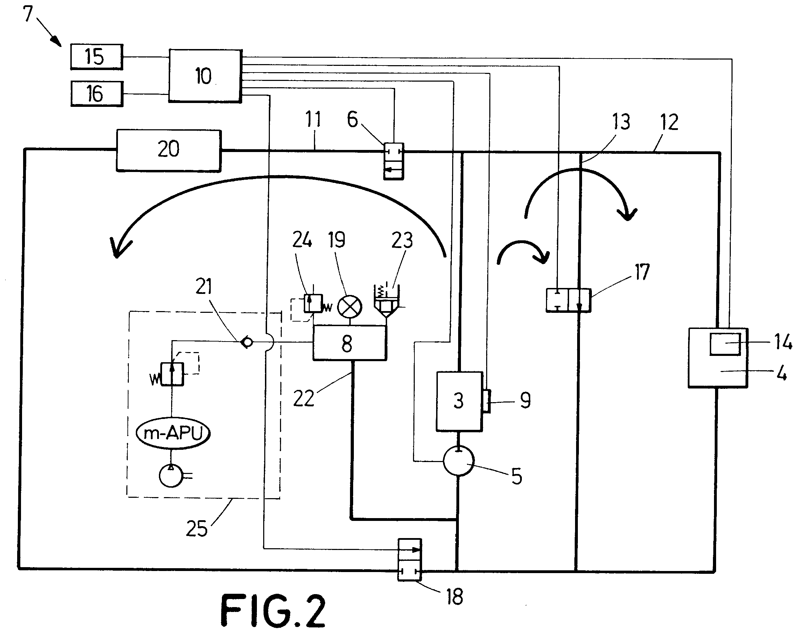

Figure 2 shows a preferred embodiment of the thermal conditioning circuit 7. The thermal conditioning circuit 7 in the drawing comprises three branch lines containing the coolant fluid circulating through said thermal conditioning circuit 7. By means of the first branch line 11, the second branch line 12 and the distribution valve 6, the circuit allows integrating the cooling and heating functionalities. In that sense, the distribution valve 6 will enable the passage of coolant fluid either towards the first branch line 11 or towards the second branch line 12, depending on a series of pre-established conditions. The first branch line 11 comprises a reservoir 20 for coolant fluid which will be at a lower temperature than the coolant fluid coming out of the braking resistor 3 and entering the first branch line 11, since the coolant fluid contained in the reservoir will allow the temperature increase caused by the braking resistor 3 to be slow enough so as to not damage any element of the system and in the same way achieve complete protection. The second branch line 12 is connected to the climate control system 4, such that with the passage of the coolant fluid through the braking resistor 3 and the subsequent absorption of heat by said fluid, the thermal conditioning circuit 7 is capable of meeting a request for heat from the climate control system 4 by means of the combined action of the communication to the ECU controlling the system and the opening of the integrated valves.

The thermal conditioning circuit 7 of Figure 2 comprises a third branch line 13 provided with an additional distribution valve 17 for enabling and disabling the passage of coolant fluid through said third branch line 13. Preferably, this additional distribution valve 17 will be open to assure coolant fluid circulation through thermal conditioning circuit 7, regardless of the fact that the remaining valves of the circuit are closed or malfunctioning. Therefore, in a preferred embodiment, the control unit 10 will activate this additional distribution valve 17 at the same time it activates the circulation pump 5 and prior to closing the first branch line 11 or second branch line 12 to avoid possible failures in the thermal conditioning circuit 7, and also to avoid the pressure surge, for which purpose seconds before closing the first branch line 11 or second branch line 12, this third branch line 13 would be opened for the purpose of preventing a sudden increase in pressure in the thermal conditioning circuit 7.

The control unit 10 is the in charge of activating the circulation pump 5 and the valves of the thermal conditioning circuit 7 depending on a series of pre-established conditions in said control unit 10. In an operation of the circuit like a cooling circuit for cooling the braking resistor 3, the control unit 10 would enable the passage of the coolant fluid through the distribution valve 6 towards the first branch line 11, and would disable the passage of the fluid through the additional distribution valve 17 towards the third branch line 13 and through the network of distribution valves of the climate control system 4 towards the second branch line 12. However, in an operation of the circuit like a heating circuit for heating the space reserved for passengers making use of the heat absorbed from the braking resistor 3 with the coolant fluid, the control unit 10 would enable the passage of said coolant fluid through the network of distribution valves of the climate control system 4 towards the second branch line 12, and would disable the passage of the fluid through the distribution valve 6 towards the first branch line 11 and through the additional distribution valve 17 towards the third branch line 13.

Additionally, for the embodiment shown in Figure 2 in which the first branch line 11 further comprises a valve 18, the control unit 10 is additionally in charge of enabling the passage of coolant fluid through said valve 18 in its operation like a cooling circuit, and of disabling the passage of coolant fluid through said valve 18 in its operation like a heating circuit, to prevent the mixture of fluid in the reservoir 20, which could increase the temperature of the fluid contained therein.

In the embodiment of Figure 2, once the thermal conditioning circuit 7 starts up, the control unit 10 would activate the circulation pump 5, the additional distribution valve 17, the distribution valve 6 and the valve 18, depending on the pre-established conditions. In that sense, according to Figure 2 and in the event that the additional distribution valve 17 is a normally open (NO) valve and the valves 6 and 18 are normally closed (NC) valves, the control unit 10 would allow the cooling of the braking resistor 3 through the first branch line 11 by opening the valves 6 and 18 and closing the additional distribution valve 17 and the network of distribution valves of the climate control system 4. Similarly, the control unit 10 would allow heating the space reserved for passengers, opening the network of distribution valves of the climate control system 4 and closing the valves 6 and 18. Preferably, the network of distribution valves of the climate control system 4 will allow distributing the coolant fluid received from the second branch line 12 between the climate control equipment, the floor convectors and the defogging device of the climate control system 4.

The thermal conditioning circuit 7 normally remains inactive, such that the control unit 10 will activate the circulation pump 5 and the corresponding valves when at least one of the following pre-established conditions in said control unit 10 is met:
- energy storage system charge is greater than 95%,
- temperature of the braking resistor 3 is greater than 70°C,
- input power in the braking resistor 3 is greater than 0 kW,
- activation of a request for heat by the climate control system 4.

The control unit 10 is capable of determining if the energy storage system charge is greater than 95% through the storage electronic control unit 15, the storage ECU 15 of the vehicle 1. Said storage ECU 15 is connected to the control unit 10, which is configured for receiving the charge of the energy storage system of the vehicle 1.

The control unit 10 is capable of determining if the temperature of the braking resistor 3 is greater than 70°C by means of its connection with a temperature sensor 9 arranged in the braking resistor 3.

The control unit 10 is capable of determining if the input power in the braking resistor 3 is greater than 0 kW through the traction electronic control unit 16, the traction ECU 16 of the vehicle 1. Said input power will correspond with the braking power value of the traction (motor) system at that time which cannot be received by the energy storage system. Said traction ECU 16 is connected to the control unit 10, which is configured for receiving the energy consumed by the braking resistor 3 and thereby protecting the traction system.

Figure 2 shows the storage ECU 15 and the traction ECU 16 as separate units of the control unit 10; nevertheless, both ECUs 15, 16 could be integrated in the control unit 10.

Finally, the control unit 10 is capable of determining the activation of a request for heat by the climate control system 4 through the measurement unit 14 of the climate control system 4, which determines the activation of the request for heat depending on the temperatures detected by the plurality of sensors of the climate control system 4 and on programmed target temperatures or on target temperatures established by the user of the vehicle 1.

As discussed, the control unit 10 controls the operation of the thermal conditioning circuit 7 based on a series of pre-established conditions.

Based on Figure 2, according to a first condition, if the energy storage system charge is greater than 95% and the temperature of the braking resistor 3 is greater than 70°C, the control unit 10 activates distribution valve 6 and distribution valve 18 to allow passage of the coolant fluid to the first branch line 11. Likewise, if the energy storage system charge is greater than 95% and the input power in the braking resistor 3 is greater than 0 kW, the control unit 10 activates distribution valve 6 and distribution valve 18 to allow passage of the coolant fluid to the first branch line 11. Under these conditions, the thermal conditioning circuit 7 allows cooling the braking resistor 3 by cooling the coolant fluid through the fluid contained in the reservoir 20.

According to another condition, if the energy storage system charge is greater than 95% and the request for heat from the climate control system 4 is activated, the control unit 10 activates distribution valve 6 and distribution valve 18 to allow passage of the coolant fluid to the second branch line 12.

The energy storage system charge being greater than 95% is satisfied in all cases, for which reason the control unit 10 activates the circulation pump 5 and the thermal conditioning circuit 7 starts working. In that sense, its operation starts when the braking resistor 3 starts to burn part of the energy generated by the motor 2 of the vehicle 1, which cannot be stored.

On the other hand, the thermal conditioning circuit 7 of Figure 2 is connected to an expansion vessel 8 for absorbing the differences in volume of the coolant fluid contained therein. Likewise, the expansion vessel 8 of Figure 2 comprises a filler cap 24, an extra first port 19 for a pressure sensor, an extra second port 23 for purging, an extra third port 21 for pressurizing, an outlet port 22 for connecting the expansion vessel 8 with the thermal conditioning circuit 7, a level sensor (not shown) arranged in another port (not shown) for coupling the level sensor of the expansion vessel, and a level visor (not shown) for being able to control said level during maintenance tasks.

Preferably, the filler cap 24 includes a spring that allows relieving the excess pressure from the circuit, wherein preferably the force of this spring will be greater than the force other standard caps due to having a pressurized circuit.

The extra first port 19 allows controlling the pressure of the thermal conditioning circuit 7 since it must be constantly pressurized. The extra second port 23 allows depressurizing the circuit, and the extra third port 21 allows pressurizing the air contained in the expansion vessel 8 by means of the pneumatic system of the vehicle 1. The elements comprised in the block 25 form a pressurized air inlet into the thermal conditioning circuit 7. In a preferred embodiment, the compressed air generated by the air compressor of the brake and suspension circuit is used to obtain this air at a pressure greater than atmospheric pressure. The purpose of increasing the pressure is to increase the temperature at which the water starts boiling, the thermal conditioning circuit thereby being able to operate at a temperature greater than 100°C. This increases the heat removal capacity in the braking resistor.

Finally, in view of this description and the drawings, the person skilled in the art may understand that the invention has been described according to several preferred embodiments thereof, but that many variations can be introduced in said preferred embodiments without departing from the scope of the invention as it is claimed.

## Claims

1. Vehicle (1) for passengers comprising:
- an electric traction motor (2) for driving or braking the vehicle (1),
- an energy storage system susceptible to storing at least part of the electric energy generated by the motor (2),
- a braking resistor (3) in charge of dissipating part of the electric energy generated by the motor (2) or stored in the energy storage system,
- a climate control system (4) for controlling the climate of a space reserved for passengers,
- a thermal conditioning circuit (7) containing a coolant fluid capable of absorbing heat, and comprising:
- a circulation pump (5) in charge of propelling coolant fluid circulation through the thermal conditioning circuit (7),
- the braking resistor (3), connected to the circulation pump (5),
- at least one distribution valve (6) located for receiving the coolant fluid going through the braking resistor (3),
- a control unit (10) configured for activating the circulation pump (5) and the at least one distribution valve (6) according to pre-established conditions,
wherein the at least one distribution valve (6) allows enabling the passage of coolant fluid towards one of the following branch lines forming the thermal conditioning circuit (7):
- a first branch line (11), connected to cooling means that allow the cooling of the coolant fluid contained in the thermal conditioning circuit (7) after its passage through the braking resistor (3),
- a second branch line (12), connected with the climate control system (4) for supplying heat to the space reserved for passengers from the heat transferred to the coolant fluid after its passage through the braking resistor (3),
and wherein the outlet of the cooling means and the outlet of the climate control system (4) are connected to the braking resistor (3) to allow the cooling thereof, **characterized in that** the vehicle further comprises:
- a storage electronic control unit (15) in charge of monitoring the state of charge of the energy storage system, wherein the control unit (10) is connected to the storage electronic control unit (15) and is configured for receiving the charge of the energy storage system from said storage electronic control unit (15)
and wherein the control unit (10) comprises at least one of the following pre-established conditions for activating the circulation pump (5):
- energy storage system charge greater than 95%,
- temperature of the braking resistor (3) greater than 70°C,
- input power in the braking resistor (3) greater than 0 kW,
- activation of a request for heat by the climate control system (4).

2. Vehicle (1) for passengers according to claim 1, **characterized in that** the thermal conditioning circuit (7) comprises:
- a third branch line (13) connected to the outlet of the braking resistor (3) and to the inlet of the circulation pump (5), and
- an additional distribution valve (17) connected to the third branch line (13) and capable of enabling the passage of coolant fluid through said third branch line (13),
and **in that** the control unit (10) is additionally configured for activating the additional distribution valve (17) once the circulation pump (5) is activated.

3. Vehicle (1) for passengers according to any of the preceding claims, **characterized in that** the thermal conditioning circuit (7) comprises a temperature sensor (9) arranged in the braking resistor (3) for detecting the temperature of the braking resistor (3), and wherein the temperature sensor (9) is connected to the control unit (10) for transmitting the temperature of the braking resistor (3).

4. Vehicle (1) for passengers according to any of the preceding claims, comprising:
- a traction electronic control unit (16) in charge of monitoring the traction of the vehicle (1),
**characterized in that** the control unit (10) is connected to the traction electronic control unit (16) and is configured for receiving the energy consumed by the braking resistor (3) from of said storage electronic control unit (15).

5. Vehicle (1) for passengers according to any of the preceding claims, **characterized in that** the climate control system (4) comprises:
- a plurality of temperature sensors,
- a measurement unit (14) in communication with the plurality of temperature sensors, and in charge of determining the activation of a request for heat by the climate control system (4) depending on the temperatures detected by the plurality of sensors and on established target temperatures,
**characterized in that** the control unit (10) is configured for receiving the request for heat of the climate control system (4).

6. Vehicle (1) for passengers according to any of the preceding claims, **characterized in that** the control unit (10) is configured for activating a request for heat by the climate control system (4) when the vehicle (1) is connected to the grid and the energy storage system is charging or completely charged.

7. Vehicle (1) for passengers according to claim 1, **characterized in that** if the energy storage system charge is greater than 95% and the temperature of the braking resistor (3) is greater than 70°C, or the input power in the braking resistor (3) is greater than 0 kW, the control unit (10) is configured for activating the distribution valve (6) such that it allows passage of the coolant fluid to the first branch line (11).

8. Vehicle (1) for passengers according to claim 1, **characterized in that** if the energy storage system charge is greater than 95% and the request for heat of the climate control system (4) is activated, the control unit (10) is configured for activating the distribution valve (6) such that it allows passage of the coolant fluid to the second branch line (12).

9. Vehicle (1) for passengers according to any of the preceding claims, **characterized in that** the climate control system (4) comprises:
- climate control equipment for controlling the climate of the space reserved for passengers,
- floor convectors for the space reserved for passengers,
- a defogging device for providing hot or cold air to the driver's seat area, and
- a network of distribution valves for distributing the coolant fluid contained in the second branch line (12) between the climate control equipment, the floor convectors and the defogging device.

10. Vehicle (1) for passengers according to any of the preceding claims, **characterized in that** the thermal conditioning circuit (7) is connected to an expansion vessel (8) for absorbing the differences in volume of the coolant fluid contained in said thermal conditioning circuit (7).

11. Vehicle (1) for passengers according to any of the preceding claims, **characterized in that** the cooling means comprise a radiator and/or a reservoir (20) containing coolant fluid at a temperature such that it allows the cooling of the coolant fluid contained in the thermal conditioning circuit (7) after its passage through the braking resistor (3).

12. Vehicle (1) for passengers according to any of the preceding claims, **characterized in that** the braking resistor (3) is connected to the outlet of the circulation pump (5), **in that** the distribution valve (6) is connected to the outlet of the braking resistor (3), and **in that** the outlet of the cooling means and the outlet of the climate control system (4) are connected to the braking resistor (3) by means of the circulation pump (5).

13. Vehicle (1) for passengers according to any of claims 1-11, **characterized in that** the circulation pump (5) is connected to the outlet of the braking resistor (3), **in that** the distribution valve (6) is connected to the outlet of the circulation pump (5), and **in that** the outlet of the cooling means and the outlet of the climate control system (4) are directly connected to the braking resistor (3).

## Patentansprüche

1. Fahrzeug (1) für Passagiere, umfassend:
- einen elektrischen Antriebsmotor (2) zum Fahren oder Bremsen des Fahrzeugs (1),
- ein Energiespeichersystem, das dafür empfänglich ist, zumindest einen Teil der durch den Motor (2) erzeugten elektrischen Energie zu speichern,
- einen Bremswiderstand (2), der dafür zuständig ist, einen Teil der durch den Motor (2) erzeugten oder im Energiespeichersystem gespeicherten elektrischen Energie abzuleiten,
- ein Klimaregelungssystem (4) zum Regeln des Klimas eines für Passagiere vorbehaltenen Raums,
- einen Wärmeaufbereitungskreislauf (7), der eine Kühlflüssigkeit enthält, die in der Lage ist, Wärme zu absorbieren, und umfasst:
- eine Umwälzpumpe (5), die dafür zuständig ist, eine Kühlflüssigkeitszirkulation durch den Wärmeaufbereitungskreislauf (7) zu treiben,
- einen Bremswiderstand (3), der an die Umwälzpumpe (5) angeschlossen ist,
- mindestens ein Verteilerventil (6), das dazu angeordnet ist, die durch den Bremswiderstand (3) hindurchgehende Kühlflüssigkeit zu empfangen,
- eine Steuereinheit (10), die dazu ausgelegt ist, die Umwälzpumpe (5) und das mindestens eine Verteilerventil (6) entsprechend vorher festgelegter Bedingungen zu aktivieren,
wobei es das mindestens eine Verteilerventil (6) zulässt, den Durchgang von Kühlflüssigkeit zu einer der den Wärmeaufbereitungskreislauf (7) bildenden folgenden Abzweigleitungen zu ermöglichen:
- eine erste Abzweigleitung (11), die an Kühleinrichtungen angeschlossen ist, die das Kühlen der in dem Wärmeaufbereitungskreislauf (7) enthaltenen Kühlflüssigkeit nach deren Durchgang durch den Bremswiderstand (3) zulassen,
- eine zweite Abzweigleitung (12), die mit dem Klimaregelungssystem (4) verbunden ist, um Wärme in den für Passagiere vorbehaltenen Raum aus der Wärme zuzuführen, die auf die Kühlflüssigkeit nach deren Durchgang durch den Bremswiderstand (3) übertragen wurde,
und wobei der Auslass der Kühleinrichtungen und der Auslass des Klimaregelungssystems (4) an den Bremswiderstand (3) angeschlossen sind, um dessen Kühlen zuzulassen,
**dadurch gekennzeichnet, dass** das Fahrzeug darüber hinaus umfasst:
- eine Speicherelektroniksteuereinheit (15), die dafür zuständig ist, den Ladezustand des Energiespeichersystems zu überwachen, wobei die Steuereinheit (10) an die Speicherelektroniksteuereinheit (15) angeschlossen und darüber hinaus dazu ausgelegt ist, die Ladung des Energiespeichersystems von der Speicherelektroniksteuereinheit (15) zu empfangen, und wobei die Steuereinheit (10) mindestens eine der vorher festgelegten Bedingungen zum Aktivieren der Umwälzpumpe (5) umfasst:
- Energiespeichersystemladung über 95 %,
- Temperatur des Bremswiderstands (3) über 70°C,
- Eingangsleistung des Bremswiderstands (3) über 0 kW,
- Aktivierung einer Anforderung nach Wärme durch das Klimaregelungssystem (4).

2. Fahrzeug (1) für Passagiere nach Anspruch 1, **dadurch gekennzeichnet, dass** der Wärmeaufbereitungskreislauf (7) umfasst:
- eine dritte Abzweigleitung (13), die an den Auslass des Bremswiderstands (3) und an den Einlass der Umwälzpumpe (5) angeschlossen ist, und
- ein zusätzliches Verteilerventil (17), das an die dritte Abzweigleitung (13) angeschlossen und in der Lage ist, den Durchgang von Kühlflüssigkeit durch die dritte Abzweigleitung (13) zu ermöglichen,
und dass die Steuereinheit (10) zusätzlich dazu ausgelegt ist, das zusätzliche Verteilerventil (17) zu aktivieren, sobald die Umwälzpumpe (5) aktiviert ist.

3. Fahrzeug (1) für Passagiere nach einem der vorhergehenden Ansprüche, **dadurch gekennzeichnet, dass** der Wärmeaufbereitungskreislauf (7) einen in dem Bremswiderstand (3) eingerichteten Temperatursensor (9) zum Erfassen der Temperatur des Bremswiderstands (3) aufweist, und wobei der Temperatursensor (9) an die Steuereinheit (10) angeschlossen ist, um die Temperatur des Bremswiderstands (3) zu übermitteln.

4. Fahrzeug (1) für Passagiere nach einem der vorhergehenden Ansprüche, umfassend:
- eine Antriebselektroniksteuereinheit (16), die dafür zuständig ist, den Antrieb des Fahrzeugs (1) zu überwachen,
**dadurch gekennzeichnet, dass** die Steuereinheit (10) an die Antriebselektroniksteuereinheit (16) angeschlossen und dazu ausgelegt ist, die durch den Bremswiderstand (3) verbrauchte Energie aus der Speicherelektroniksteuereinheit (15) zu empfangen.

5. Fahrzeug (1) für Passagiere nach einem der vorhergehenden Ansprüche, **dadurch gekennzeichnet, dass** das Klimaregelungssystem (4) umfasst:
- mehrere Temperatursensoren,
- eine Messeinheit (14), die mit den mehreren Temperatursensoren in Kommunikation steht und dafür zuständig ist, die Aktivierung einer Anforderung nach Wärme durch das Klimaregelungssystem (4) je nach den durch die mehreren Sensoren erfassten Temperaturen und nach festgelegten Solltemperaturen zu bestimmen,
**dadurch gekennzeichnet, dass** die Steuereinheit (10) dazu ausgelegt ist, die Anforderung nach Wärme des Klimaregelungssystems (4) zu empfangen.

6. Fahrzeug (1) für Passagiere nach einem der vorhergehenden Ansprüche, **dadurch gekennzeichnet, dass** die Steuereinheit (10) dazu ausgelegt ist, eine Anforderung nach Wärme durch das Klimaregelungssystem (4) dann zu aktivieren, wenn das Fahrzeug (1) an das Netz angeschlossen ist und das Energiespeichersystem lädt oder vollständig geladen ist.

7. Fahrzeug (1) für Passagiere nach Anspruch 1, **dadurch gekennzeichnet, dass**, wenn die Energiespeichersystemladung über 95 % und die Temperatur des Bremswiderstands (3) über 70°C beträgt, oder die Eingangsleistung in den Bremswiderstand (3) mehr als 0 kW beträgt, die Steuereinheit (10) dazu ausgelegt ist, das Verteilerventil (6) so zu aktivieren, dass es den Durchgang der Kühlflüssigkeit zur ersten Abzweigleitung (11) zulässt.

8. Fahrzeug (1) für Passagiere nach Anspruch 1, **dadurch gekennzeichnet, dass**, wenn die Energiespeichersystemladung über 95 % beträgt und die Anforderung nach Wärme des Klimaregelungssystems (4) aktiviert ist, die Steuereinheit (10) dazu ausgelegt ist, das Verteilerventil (6) so zu aktivieren, dass es den Durchgang der Kühlflüssigkeit zur zweiten Abzweigleitung (12) zulässt.

9. Fahrzeug (1) für Passagiere nach einem der vorhergehenden Ansprüche, **dadurch gekennzeichnet, dass** das Klimaregelungssystem (4) umfasst:
- eine Klimaregelungsausrüstung zum Regeln des Klimas des für Passagiere vorbehaltenen Raums,
- Bodenkonvektoren für den für Passagiere vorbehaltenen Raum,
- eine Antibeschlagvorrichtung, um dem Fahrersitzbereich heiße oder kalte Luft bereitzustellen, und
- ein Netzwerk von Verteilerventilen, um die in der zweiten Abzweigleitung (12) enthaltene Kühlflüssigkeit zwischen der Klimaregelungsausrüstung, den Bodenkonvektoren und der Antibeschlagvorrichtung zu verteilen.

10. Fahrzeug (1) für Passagiere nach einem der vorhergehenden Ansprüche, **dadurch gekennzeichnet, dass** der Wärmeaufbereitungskreislauf (7) an ein Ausdehnungsgefäß (8) angeschlossen ist, um die Volumendifferenzen der in dem Wärmeaufbereitungskreislauf (7) enthaltenen Kühlflüssigkeit aufzunehmen.

11. Fahrzeug (1) für Passagiere nach einem der vorhergehenden Ansprüche, **dadurch gekennzeichnet, dass** die Kühleinrichtungen einen Radiator und/oder einen Behälter (20) umfassen, der Kühlflüssigkeit auf einer Temperatur enthält, und zwar so, dass sie die Kühlung der im Wärmeaufbereitungskreislauf (7) enthaltenen Kühlflüssigkeit nach deren Durchgang durch den Bremswiderstand (3) zulässt.

12. Fahrzeug (1) für Passagiere nach einem der vorhergehenden Ansprüche, **dadurch gekennzeichnet, dass** der Bremswiderstand (3) an den Auslass der Umwälzpumpe (5) angeschlossen ist, dass das Verteilerventil (6) an den Auslass des Bremswiderstands (3) angeschlossen ist, und dass der Auslass der Kühleinrichtungen und der Auslass des Klimaregelungssystems (4) mittels der Umwälzpumpe (5) an den Bremswiderstand (3) angeschlossen sind.

13. Fahrzeug (1) für Passagiere nach einem der Ansprüche 1 bis 11, **dadurch gekennzeichnet, dass** die Umwälzpumpe (5) an den Auslass des Bremswiderstands (3) angeschlossen ist, dass das Verteilerventil (6) an den Auslass der Umwälzpumpe (5) angeschlossen ist, und dass der Auslass der Kühleinrichtungen und der Auslass des Klimaregelungssystems (4) direkt an den Bremswiderstand (3) angeschlossen sind.

## Revendications

1. Véhicule (1) pour passagers comprenant :
- un moteur électrique de traction (2) pour entraîner ou freiner le véhicule (1),
- un système de stockage d'énergie susceptible de stocker au moins une partie de l'énergie électrique générée par le moteur (2),
- une résistance de freinage (3) chargée de dissiper une partie de l'énergie électrique générée par le moteur (2) ou stockée dans le système de stockage d'énergie,
- un système de commande climatique (4) pour commander le climat d'un espace réservé aux passagers,
- un circuit de conditionnement thermique (7) contenant un fluide réfrigérant capable d'absorber de la chaleur, et comprenant :
- une pompe de circulation (5) chargée de propulser une circulation de fluide réfrigérant à travers le circuit de conditionnement thermique (7),
- la résistance de freinage (3), reliée à la pompe de circulation (5),
- au moins une vanne de distribution (6) positionnée pour recevoir le fluide réfrigérant passant à travers la résistance de freinage (3),
- une unité de commande (10) configurée pour activer la pompe de circulation (5) et la au moins une vanne de distribution (6) conformément à des conditions préétablies,
dans lequel au moins une vanne de distribution (6) autorise de permettre le passage du fluide réfrigérant vers l'une des lignes secondaires suivantes formant le circuit de conditionnement thermique (7) :
- une première ligne secondaire (11), reliée à des moyens de refroidissement qui permettent le refroidissement du fluide réfrigérant contenu dans le circuit de conditionnement thermique (7) après son passage à travers la résistance de freinage (3),
- une deuxième ligne secondaire (12), reliée au système de commande climatique (4) pour alimenter de la chaleur dans l'espace réservé aux passagers à partir de la chaleur transférée au fluide réfrigérant après son passage à travers la résistance de freinage (3),
et dans lequel la sortie des moyens de refroidissement et la sortie du système commande climatique (4) sont reliées à la résistance de freinage (3) pour permettre son refroidissement, **caractérisé en ce que** le véhicule comprend en outre :
- une unité de commande électronique de stockage (15) chargée de surveiller l'état de charge du système de stockage d'énergie, dans lequel l'unité de commande (10) est connectée à l'unité de commande électronique de stockage (15) et est configurée pour recevoir la charge du système de stockage d'énergie en provenance de ladite unité de commande électronique de stockage (15) et dans lequel l'unité de commande (10) comprend au moins l'une des conditions préétablies suivantes pour activer la pompe de circulation (5) :
- charge de système de stockage d'énergie supérieure à 95 %,
- température de la résistance de freinage (3) supérieure à 70°C,
- puissance d'entrée dans la résistance de freinage (3) supérieure à 0 kW,
- activation d'une demande de chaleur par le système de commande climatique (4).

2. Véhicule (1) pour passagers selon la revendication 1, **caractérisé en ce que** le circuit de conditionnement thermique (7) comprend :
- une troisième ligne secondaire (13) reliée à la sortie de la résistance de freinage (3) et à l'entrée de la pompe de circulation (5), et
- une vanne de distribution supplémentaire (17) reliée à la troisième ligne secondaire (13) et capable de permettre le passage de fluide réfrigérant à travers ladite troisième ligne secondaire (13),
et **en ce que** l'unité de commande (10) est de plus configurée pour activer la vanne de distribution supplémentaire (17) une fois que la pompe de circulation (5) est activée.

3. Véhicule (1) pour passagers selon l'une quelconque des revendications précédentes, **caractérisé en ce que** le circuit de conditionnement thermique (7) comprend un capteur de température (9) disposé dans la résistance de freinage (3) pour détecter la température de la résistance de freinage (3), et dans lequel le capteur de température (9) est connecté à l'unité de commande (10) pour transmettre la température de la résistance de freinage (3).

4. Véhicule (1) pour passagers selon l'une quelconque des revendications précédentes, comprenant :
- une unité électronique de commande de traction (16) chargée de surveiller la traction du véhicule (1),
**caractérisé en ce que** l'unité de commande (10) est reliée à l'unité de commande électronique de traction (16) et est configurée pour recevoir l'énergie consommée par la résistance de freinage (3) en provenance de ladite unité de commande électronique de stockage (15).

5. Véhicule (1) pour passagers selon l'une quelconque des revendications précédentes, **caractérisé en ce que** le système de commande climatique (4) comprend :
- une pluralité de capteurs de température,
- une unité de mesure (14) en communication avec la pluralité de capteurs de température, et chargée de déterminer l'activation d'une demande de chaleur par le système de commande climatique (4) en fonction des températures détectées par la pluralité de capteurs et des températures cibles établies,
**caractérisé en ce que** l'unité de commande (10) est configurée pour recevoir la demande de chaleur du système de commande climatique (4).

6. Véhicule (1) pour passagers selon l'une quelconque des revendications précédentes, **caractérisé en ce que** l'unité de commande (10) est configurée pour activer une demande de chaleur par le système de commande climatique (4) lorsque le véhicule (1) est relié au réseau et le système de stockage d'énergie est en charge ou complètement chargé.

7. Véhicule (1) pour passagers selon la revendication 1, **caractérisé en ce que** si la charge de système de stockage d'énergie est supérieure à 95 % et la température de la résistance de freinage (3) est supérieure à 70°C, ou la puissance d'entrée dans la résistance de freinage (3) est supérieure à 0 kW, l'unité de commande (10) est configurée pour activer la vanne de distribution (6) de telle sorte qu'elle permet le passage du fluide réfrigérant vers la première ligne secondaire (11).

8. Véhicule (1) pour passagers selon la revendication 1, **caractérisé en ce que** si la charge de système de stockage d'énergie est supérieure à 95 % et la demande de chaleur du système de commande climatique (4) est activée, l'unité de commande (10) est configurée pour activer la vanne de distribution (6) de telle sorte qu'elle permet le passage du fluide réfrigérant vers la deuxième ligne secondaire (12).

9. Véhicule (1) pour passagers selon l'une quelconque des revendications précédentes, **caractérisé en ce que** le système de commande climatique (4) comprend :
- un équipement de commande climatique pour commander le climat de l'espace réservé aux passagers,
- des convecteurs au sol pour l'espace réservé aux passagers,
- un dispositif de désembuage pour fournir de l'air chaud ou froid dans la zone de siège du conducteur, et
- un réseau de vannes de distribution pour distribuer le fluide réfrigérant contenu dans la deuxième ligne secondaire (12) entre l'équipement de commande climatique, les convecteurs au sol et le dispositif de désembuage.

10. Véhicule (1) pour passagers selon l'une quelconque des revendications précédentes, **caractérisé en ce que** le circuit de conditionnement thermique (7) est relié à un récipient d'expansion (8) pour absorber les différences de volume du fluide réfrigérant contenu dans ledit circuit de conditionnement thermique (7).

11. Véhicule (1) pour passagers selon l'une quelconque des revendications précédentes, **caractérisé en ce que** les moyens de refroidissement comprennent un radiateur et/ou un réservoir (20) contenant du fluide réfrigérant à une température telle qu'il permet le refroidissement du fluide réfrigérant contenu dans le circuit de conditionnement thermique (7) après son passage à travers la résistance de freinage (3).

12. Véhicule (1) pour passagers selon l'une quelconque des revendications précédentes, **caractérisé en ce que** la résistance de freinage (3) est reliée à la sortie de la pompe de circulation (5), **en ce que** la vanne de distribution (6) est reliée à la sortie de la résistance de freinage (3), et **en ce que** la sortie des moyens de refroidissement et la sortie du système de commande climatique (4) sont reliées à la résistance de freinage (3) au moyen de la pompe de circulation (5).

13. Véhicule (1) pour passagers selon l'une quelconque des revendications 1 à 11, **caractérisé en ce que** la pompe de circulation (5) est reliée à la sortie de la résistance de freinage (3), **en ce que** la vanne de distribution (6) est reliée à la sortie de la pompe de circulation (5), et **en ce que** la sortie des moyens de refroidissement et la sortie du système de commande climatique (4) sont directement reliées à la résistance de freinage (3).
